**Europäisches Patentamt**

**European Patent Office**

**Office européen des brevets**

(11) Veröffentlichungsnummer : **0 048 015**
**B1**

(19)

(12)

# EUROPÄISCHE PATENTSCHRIFT

(45) Veröffentlichungstag der Patentschrift :
19.08.87

(51) Int. Cl.⁴ : **G 01 C 25/00**, G 01 B 11/27,
G 01 S 7/48

(21) Anmeldenummer : 81107241.2

(22) Anmeldetag : 14.09.81

(54) **Justier- und Prüfeinrichtung für ein Laserentfernungsmessystem.**

(30) Priorität : 16.09.80 DE 3034922

(43) Veröffentlichungstag der Anmeldung :
24.03.82 Patentblatt 82/12

(45) Bekanntmachung des Hinweises auf die Patenterteilung : 19.08.87 Patentblatt 87/34

(84) Benannte Vertragsstaaten :
AT BE CH DE FR GB IT LI LU NL SE

(56) Entgegenhaltungen :
DE-A- 2 343 596
DE-A- 2 536 878
FR-A- 2 266 158

(73) Patentinhaber : **Siemens Aktiengesellschaft Berlin
und München
Wittelsbacherplatz 2
D-8000 München 2 (DE)**

(72) Erfinder : **Grage, Ludger, Ing.grad.
Frühlingstrasse 46
D-8031 Eichenau (DE)**
Erfinder : **Ryseck, Werner, Dipl.-Phys.
Am Stichgartl 2a
D-8042 Oberschleissheim (DE)**
Erfinder : **Michl, Franz
Carl-Maria-von-Weber-Weg 3
D-8192 Geretsried 2 (DE)**

## Beschreibung

Die Erfindung betrifft eine Justier- und Prüfeinrichtung für ein Laserentfernungsmeßsystem nach dem Oberbegriff des Anspruchs 1.

Für verschiedene Anwendungen, z. B. für militärische Anwendungen, werden zur genauen und schnellen Bestimmung der Entfernung eines Objektes, z. B. der Entfernung zwischen einem Zielobjekt und einer Waffe, bereits in großem Umfang Laserentfernungsmesser eingesetzt. Aufgrund der intensiven Bündelung des Laserstrahles ist bei diesen Geräten eine exakte Parallelität der optischen Achsen von Lasersender und Laserempfänger sowie einer optischen Referenzachse, z. B. der Visierlinie einer Waffe oder eines Richtgerätes, erforderlich. Es muß daher, z. B. nach der Montage des gesamten Gerätes, eine Überprüfung und exakte Justierung des Laserentfernungsmessers vorgenommen werden.

Durch die DE-OS 25 36 878 ist ein optronisches System mit einem von einer Justierhilfe Gebrauch machenden optronischen Gerät, insbesondere ein Laserentfernungsmesser, bekannt, das einen optischen Sender mit einer Sendeoptik, einen optronischen Empfänger mit einer Empfangsoptik und eine Visiereinrichtung mit einer Visieroptik aufweist, die gegebenenfalls mit der Empfangsoptik kombiniert ist. Hierbei ist als Justierhilfe ein Tripelstreifen vorgesehen, der vor den verschiedenen Optiken auf einen Geräteträger aufsetzbar ist und den Abstand zwischen der Sendeoptik und der Empfangsoptik überbrückt und in seiner Längsrichtung verschiebbar ist. Außerdem ist an dem Geräteträger ein Referenzspiegel in Form eines Tripelspiegels fest angeordnet, über den in Verbindung mit dem Tripelstreifen eine optische Brücke zwischen der Empfangs- bzw. Visieroptik und einer die optische Bezugsachse des Systems festlegenden Meßoptik, beispielsweise einem Kollimatorfernrohr herstellbar ist.

Der Erfindung liegt die Aufgabe zugrunde, eine vor allem die exakte Vermessung und Justierung der relevanten optischen Achsen, d. h. die genaue Ausrichtung der Parallelität der optischen Achsen von Lasersender und Laserempfänger zueinander und zu einer optischen Referenzachse ermöglichende Justier- und Prüfeinrichtung für ein Laserentfernungsmeßsystem so auszubilden, daß sie bei einem möglichst kompakten und modularen Aufbau und auch bei größeren Abständen der relevanten optischen Achsen sowohl bei eingebauten als auch bei ausgebauten Geräten einsetzbar ist, ohne daß Freiraummessungen mit den damit zusammenhängenden Sicherheitsrisiken und Meßunsicherheiten notwendig sind.

Diese Aufgabe wird durch eine Justier- und Prüfeinrichtung für ein Laserentfernungsmeßsystem gemäß dem Anspruch gelöst.

Eine derartige Einrichtung besteht im wesentlichen aus drei Einheiten, nämlich einem Meßgerät mit einem Meßkollimator sowie einem optischen und einem mechanischen Adapter zur Kopplung des Meßgerätes an das Laserentfernungsmeßsystem. Der Meßkollimator kann mit Hilfe der Einstelleinrichtung ohne weiteres auf eine Referenzachse, die ggf. auch mit der Empfängerachse zusammenfallen kann, ausgerichtet werden. Nach dieser Einstellung können in Folge der optsichen Kopplung des Meßgerätes mit dem Laserentfernungsmeßsystem über den optischen Adapter Sender- und Empfängerachse des Laserentfernungsmeßsystems parallel zueinander und zu der Referenzachse ausgerichtet werden. Dabei ermöglicht die erfindungsgemäße Einrichtung aufgrund ihres vorteilhaften Aufbaus mit drei kompakten homogenen Einheiten die Durchführung dieser Meß- und Justiervorgänge sowohl an eingebauten als auch an ausgebauten Geräten, ohne daß Freiraummessungen erforderlich sind. Die erfindungsgemäße Einrichtung kann in Folge ihres vorteilhaften Aufbaus so ausgebildet werden, daß beim Laserbetrieb keine schädliche Laserstrahlung auftreten kann. Die Prüfung und Justierung eines Laserentfernungsmeßsystems kann daher auch innerhalb geschlossener Räume ohne Benutzung von Laserschutzbrillen erfolgen.

Laserentfernungsmesser besitzen in der Regel zwei optische Achsen, nämlich die Empfängerachse und die Senderachse. Diese beiden Achsen müssen — wie bereits beschrieben — zueinander und zu einer Referenzachse genau parallel ausgerichtet werden. Da die Achsabstände verschiedener Lasertypen unterschiedlich groß sind, werden bei einer erfindungsgemäßen Einrichtung in vorteilhafter Weise die Strahlengänge der jeweils zu vermessenden Achsen des Laserentfernungsmeßsystems mit dem Strahlengang des Kollimators über bewegbare optische Koppelglieder, z. B. in Form von Z-Umlenkspiegeln, zur Deckung gebracht. Dieses Verfahren hat gegenüber einem Kollimator großer Apertur, mit dem alle zu vermessenden optischen Achsen gleichzeitig erfaßt werden können, erhebliche Vorteile. Ein Vorteil besteht darin, daß der Meßkollimator in den Abmessungen klein gehalten werden kann. Außerdem ist die Meßgenauigkeit sehr hoch, weil nur mit achsnahen Strahlen gemessen wird (kleines Öffnungsverhältnis). Ein weiterer Vorteil liegt darin, daß der Einfluß des Temperaturganges des Meßkollimators auf die Meßgenauigkeit praktisch ausgeschaltet ist, weil mit achssymmetrischen Strahlen gemessen wird.

Die Anzahl der die optischen Achsen überbrückenden optischen Koppelglieder hängt bei einer erfindungsgemäßen Einrichtung vom Aufbau des jeweiligen Laserentfernungsmeßsystems ab. Bei einem System, bei welchem die Empfängerachse und die Referenzachse zusammenfallen, ist mindestens ein optisches Koppelglied erforderlich, welches den Abstand Senderachse-Kollimatorachse überbrückt. Für den Fall, daß die Referenzachse von der Empfängerachse abweicht, werden mindestens zwei optische Koppelglieder verwendet, von denen das eine den Abstand Senderachse-Kollimatorachse und das andere den Abstand Kollimatorachse-Referenzachse überbrückt. Schließlich kann noch ein weiteres optisches Koppelglied notwendig sein, wenn die Kollimatorachse von der Empfängerachse abweicht. Dieses weitere Koppelglied überbrückt dann den Abstand Kollimatorachse-Empfängerachse.

In vorteilhafter Weise ist bei einer erfindungsgemäßen Einrichtung der Kollimator als Infrarot-Kollimator mit einer Infrarot-Lichtquelle, einem im Strahlengang der Infrarot-Lichtquelle angeordneten Filter, einem Infrarot-Bildwandler und einem in den Strahlengang des Infrarot-Bildwandlers eingespiegelten Okular als Beobachtungseinrichtung ausgebildet. Auf diese Weise ist es möglich, mit einem einzigen Gerät bei der visuellen Betrachtung im sichtbaren Spektralbereich zu arbeiten, während der aktiv messende Kollimator im nicht sichtbaren Gebiet liegt und mit der Betriebswellenlänge des Laserentfernungsmessers, beispielsweise bei Verwendung eines YAG-Nd-Lasers mit $\lambda = 1,064$ $\mu$m arbeitet.

Es ist bei einem als Infrarot-Kollimator ausgebildeten Kollimator jedoch auch möglich, anstelle eines Infrarot-Bildwandlers mit Okular zur Betrachtung der Infrarot-beleuchteten Strichplatte eine Fernsehkamera mit abgesetztem Monitor zu verwenden.

Zweckmäßigerweise sind bei einer erfindungsgemäßen Einrichtung im Strahlengang zwischen Sender und Kollimator Dämpfungsfilter angeordnet.

Bei einer erfindungsgemäßen Einrichtung kann außer der Messung der Parallelität der optischen Achsen von Sender und Empfänger zueinander und zu einer optischen Referenzachse gleichzeitig auch noch eine Kontrolle des Fernfelles und der Divergenz des Laserstrahles sowie eine Vermessung des Empfängergesichtsfeldes durchgeführt werden, ohne daß es zusätzlicher Einrichtungen bedarf.

Bei Laserentfernungsmessern kann es jedoch erforderlich sein, von Zeit zu Zeit und/oder bei bestimmten Anwendungen weitere wichtige Systemkennwerte zu überprüfen. Es wäre daher vorteilhaft, eine Justier- und Prüfeinrichtung zur Verfügung zu haben, welche außer der Vermessung der optischen Achsen auch die Überprüfung der wichtigsten Systemkennwerte ermöglicht. Es ist daher Aufgabe von verschiedenen Weiterbildungen der Erfindung, eine solche Justier- und Prüfeinrichtung zu schaffen.

Bei einer vorteilhaften Weiterbildung der Erfindung ist daher in einem eigenen geschlossenen Raum des Meßgerätes eine Streueinheit mit einer das Laserlicht des Sendestrahles diffus streuenden Streuscheibe vorgesehen und im Streubereich der Streuscheibe ein mit einer Leistungsmeßelektronik in Verbindung stehendes Fotoelement angeordnet. Durch eine derartige Streueinheit ist ein Leistungsmeßteil geschaffen, mit dessen Hilfe eine Kontrolle der Ausgangsleistung des Lasersenders durchgeführt werden kann.

Eine besonders vorteilhafte Ausführungsform einer solchen erfindungsgemäßen Einrichtung ist dadurch weitergebildet, daß in den Streubereich der Streuscheibe ein Ende mindestens einer Lichtwellenleitung bestimmter Länge und das andere Ende der Lichtwellenleitung in den Kollimator eingekoppelt ist. Hierbei wird die durch die Länge der als optische Verzögerungsleitung wirkenden Lichtwellenleitung bedingte Laufzeit vom Laserentfernungsmesser als Entfernungsmeßwert ausgewertet. Mit einer derartigen Einrichtung kann daher gleichzeitig auch eine Prüfung der Entfernungsmeßgenauigkeit durchgeführt werden.

Bei einer weiteren vorteilhaften Ausführungsform einer erfindungsgemäßen Einrichtung mit zwei Lichtwellenleitungen ist vorgesehen, daß die zusätzliche Lichtwellenleitung eine derartige Länge aufweist, daß durch die zusätzliche Lichtwellenleitung eine einer bestimmten Meßstrecke entsprechende Differenzlänge entsteht. Durch Umleitung eines Lichtanteils des Sendestrahls über die eine Nebenstrecke bildende zusätzliche optische Verzögerungsleitung läßt sich eine Funktionsprüfung der Doppelechoauswertung bzw. eine Kontrolle der Tiefenauflösung durchführen.

Mit Hilfe der im Meßgerät vorgesehenen Streueinheit ist in Verbindung mit den vorgesehenen Dämpfungsfiltern ferner gleichzeitig auch eine Messung der Systemempfindlichkeit über eine Ermittlung des Extinktionswertes möglich. Um diese zusätzlichen Messungen mit den vorhandenen optischen Koppelgliedern vornehmen zu können, ist es zweckmäßig, wenn das den Abstand Kollimatorachse-Senderachse überbrückende optische Koppelglied des optischen Adapters auch den Abstand Streueinheit-Senderachse überbrückt und vor die Streueinheit schwenkbar ist und wenn der Kollimatorausgang und die Streueinheit auf einem Kreisbogen liegend angeordnet sind.

Weitere vorteilhafte Ausgestaltungen des Gegenstandes des Patentanspruchs 1 sind in den übrigen Unteransprüchen angegeben. So ergibt sich eine besondere einfache Handhabung der Einstellung der Kollimatorachse auf die Referenzachse bei einer erfindungsgemäßen Einrichtung dadurch, daß der Kollimator auf einer in x- und y-Richtung eines Koordinatensystems mittels der Einstelleinrichtung bewegbaren Trageinrichtung angeordnet ist.

Bei einer einfachen kompakten Ausführungsform eines bei der erfindungsgemäßen Einrichtung verwendbaren mechanischen Adapters ist in vorteilhafter Weise vorgesehen, daß der mechanische Adapter aus mindestens zwei quer zueinander angeordneten Tragplatten besteht, von denen die eine Tragplatte zur schraubbaren Befestigung des Meßgerätes und die zur ersten Tragplatte quer angeordneten Tragplatten zur Befestigung des mechanischen Adapters am Laserentfernungsmeßsystem oder dessen Tragekonstruktion dienen.

Im Hinblick auf die Sicherheit bei der Bedienung der erfindungsgemäßen Einrichtung ist es zweckmäßig, wenn der optische Adapter an der dem Lasersender zugewandten Außenseite mit einem geschlossenen, den Abstand zwischen dem optischen Adapter und der Senderoptik überbrückenden Schutztubus ausgebildet ist.

Ebenfalls im Hinblick auf die Bedienungssicherheit der erfindungsgemäßen Einrichtung ist es von Vorteil, wenn das Meßgerät mit einer Sicherheitseinrichtung ausgebildet ist und die Meßvorgänge nur bei geschlossenem Sicherheitskreis der Sicherheitseinrichtung durchführbar sind. Hiermit wird ein unbeabsichtigtes Austreten von Laserstrahlung und damit eine Gefährdung des Bedienungspersonals verhindert.

Schließlich ist es in baulicher und bedienungstechnischer Hinsicht vorteilhaft, wenn bei der erfindungsgemäßen Einrichtung alle Bedien- und Anzeigeelemente des Meßgerätes auf einem als selbständige Einheit abnehmbar auf dem Meßgerät befestigten Bedien- und Anzeigefeld zusammengefaßt sind. Damit kann das Meßgerät auch vom abgesetzten Bedien- und Anzeigefeld betrieben werden.

Im folgenden wird die Erfindung anhand eines in der Zeichnung dargestellten Ausführungsbeispieles einer Justier- und Prüfeinrichtung für ein Laserentfernungsmeßsystem näher erläutert. Es handelt sich dabei um ein bevorzugtes Ausführungsbeispiel, welches die Durchführung aller oben beschriebenen Messungen und Kontrollen mit einer einzigen Einrichtung ermöglicht. Es zeigen die

Figur 1 eine Aufbauübersicht einer erfindungsgemäßen Einrichtung,

Figuren 2, 3 und 4 in Vorderansicht, Seitenansicht und Draufsicht jeweils ein bei der erfindungsgemäßen Einrichtung verwendbares Meßgerät,

Figur 5 bis 11 den näheren Aufbau der erfindungsgemäßen Einrichtung mit den verschiedenen Meßvorgängen.

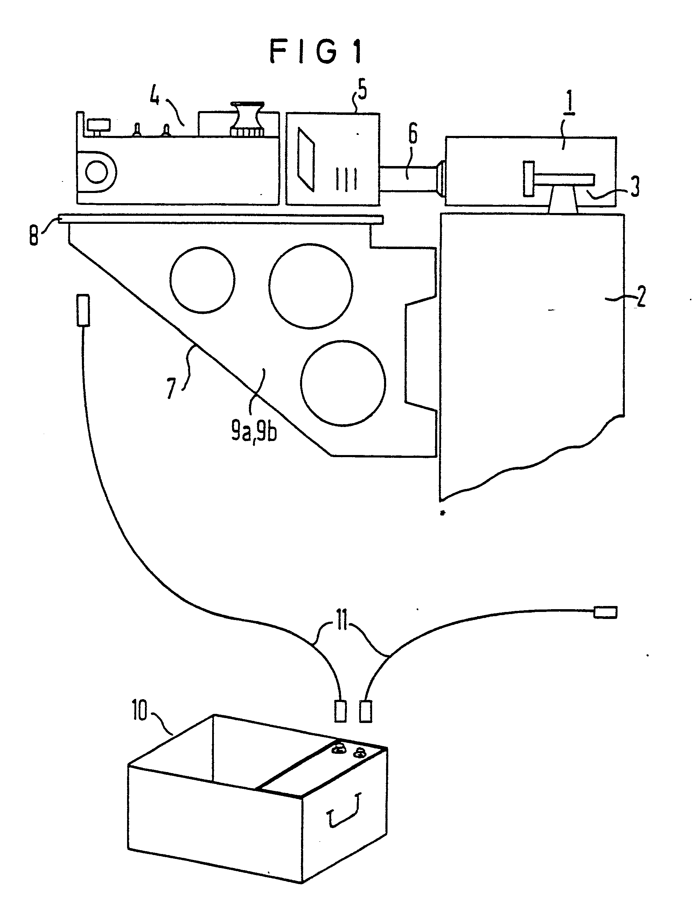

Die Aufbauübersicht in Fig. 1 zeigt die erfindungsgemäße Einrichtung, welche mechanisch und optisch an ein Laserentfernungsmeßsystem 1 angekoppelt ist. Dieses Laserentfernungsmeßsystem ist auf einer Tragekonstruktion 2 befestigt, an der auch eine zum System gehörende Referenzeinheit 3 angeordnet ist, deren optische Achse hier von den optischen Achsen des Lasersenders und des Laserempfängers abgesetzt ist. Die Einrichtung nach Fig. 1 besteht aus drei selbständigen Einheiten, nämlich einem Meßgerät 4 sowie einem an dieses Meßgerät mechanisch koppelbaren optischen Adapter 5 mit Schutztubus 6 und einem mechanischen Adapter 7, der das Meßgerät 4 und den optischen Adapter 5 trägt und an dem Laserentfernungsmeßsystem oder seiner Tragekonstruktion 2 befestigbar ist. Der mechanische Adapter 7 besteht hier z. B. aus drei Tragplatten 8 bzw. 9a und 9b, von denen die Tragplatte 8 zur schraubbaren Befestigung des Meßgerätes 4 und die beiden zur ersten Tragplatte senkrechten Tragplatten 9a, 9b zur Befestigung des mechanischen Adapters 7 an der Tragekonstruktion 2 dienen. Die Stromversorgung für das Meßgerät ist in einem Koffer 10 untergebracht, der gleichzeitig als Transportkoffer für das Meßgerät, für Verbindungs- und Anschlußkabel 11 und Werkzeug dient und mit einem nicht dargestellten Deckel spritzwasserdicht abschließbar ist. Der optische und der mechanische Adapter können in einem weiteren, nicht näher dargestellten Transportkoffer untergebracht werden, der u. a. auch weiteres Werkzeug oder weitere Verbindungs- und Anschlußkabel enthalten kann.

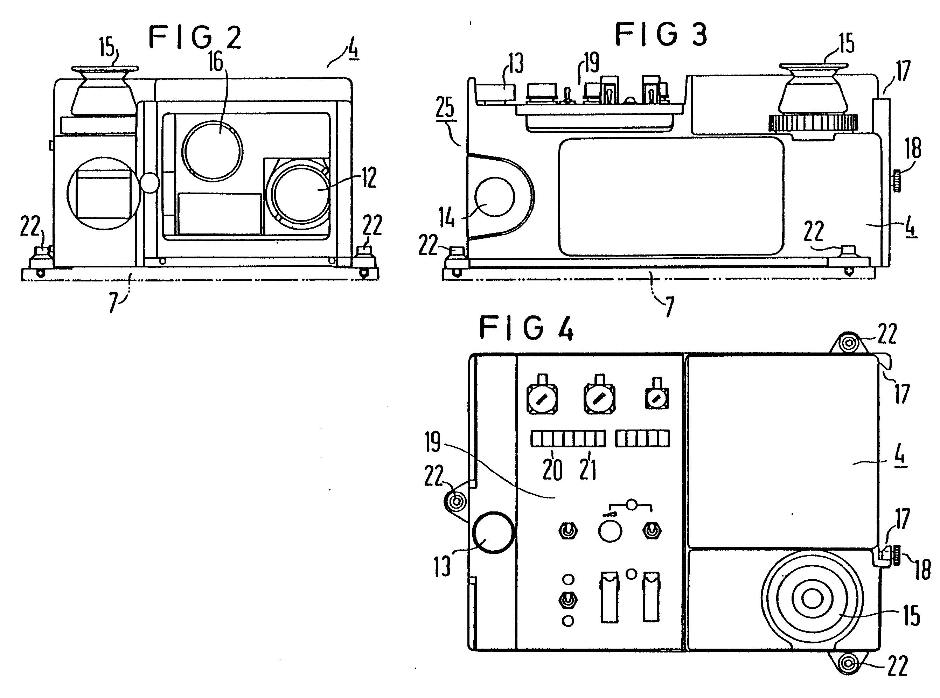

In den Fig. 2, 3 und 4 ist das Meßgerät 4 näher dargestellt. Es ist als selbständige Einheit mit einem eigenen Gehäuse ausgebildet und weist als wesentlichen Bestandteil der Einrichtung einen Meßkollimator auf, dessen Kollimatorlinse 12 in Fig. 2 zu sehen ist. Zur Einstellung der Kollimatorachse auf die optische Achse der Referenzeinheit 3 in dem Meßgerät 4 eine Einstelleinrichtung 25 vorgesehen, welche im wesentlichen aus einem Einstellgetriebe besteht, das von außen mittels zweier Drehknöpfe 13 und 14 zu betätigen ist. Zur Einstellung ist der Kollimator zweckmäßigerweise auf einer in x- und y-Richtung eines Koordinatensystems über die Einstelleinrichtung bewegbaren Trageinrichtung angeordnet. Auf diese Weise wird der Kollimator in zwei Achsen intern derart gekippt, daß die Kollimatorachse genau parallel zur Referenzachse liegt. Bei zu großer Ablage der Kollimatorachse kann ggf. eine Voreinstellung durch eine mechanische oder optische Ausrichthilfe ermöglicht werden. Ferner ist das Meßgerät noch mit einem Okular 15 als Beobachtungseinrichtung und einer später noch beschriebenen Streueinheit 16 ausgestattet. Wie insbesondere aus den Fig. 3 und 4 zu sehen ist, ist das Meßgerät an seiner Vorderseite zur mechanischen Ankopplung des optischen Adapters mit einer Schwalbenschwanzführung 17 und einer Schraubklemmung 18 ausgebildet. Auch der optische Adapter selbst weist an der entsprechenden Außenseite in diese Schwalbenschwanzführung passende Führungen auf. Schließlich ist auf dem Meßgerät noch ein Bedien- und Anzeigefeld 19 befestigt, auf welchem alle Bedien- und Anzeigeelemente für die Durchführung der Messungen, Kontrollen und Schaltungen zusammengefaßt sind. Das Bedien- und Anzeigefeld 19 ist als selbständige Einheit ausgebildet und abnehmbar am Meßgerät befestigt, so daß dieses auch vom abgesetzten Bedien- und Anzeigefeld betreibbar ist. Das Bedien- und Anzeigefeld 19 ist z. B. mit zwei Entfernungsmeßwertanzeigen 20, 21, einer Sendebetrieb-Einschaltung sowie digitalen Ziffernanzeigen für die verschiedenen Meßvorgänge versehen. Schließlich ist das Meßgerät noch mit einer automatischen Selbstprüfeinrichtung mit Signalisierung der Betriebsbereitschaft der Einrichtung und Überwachung der elektrischen Funktionen des Meßgerätes sowie mit einer Sicherheitseinrichtung ausgebildet, wobei die Meßvorgänge nur bei geschlossenem Sicherheitskreis der Sicherheitseinrichtung durchführbar sind. Wie in den Fig. 2, 3 und 4 ferner noch zu sehen ist, ist das Meßgerät mittels dreier Schrauben 22 am mechanischen Adapter 7 befestigt. Der mechanische Adapter ermöglicht die meßtechnisch einwandfreie Anbringung des Meßgerätes einschließlich des optischen Adapters an das zu überprüfende Laserentfernungsmeßsystem. Dabei sind Meßgerät und Laserentfernungsmeßsystem derart gekoppelt, daß der Kollimatorausgang mit der Kollimatorlinse 12 genau dem Laserempfänger gegenübersteht, d. h. Kollimatorachse und Empfängerachse fluchten miteinander.

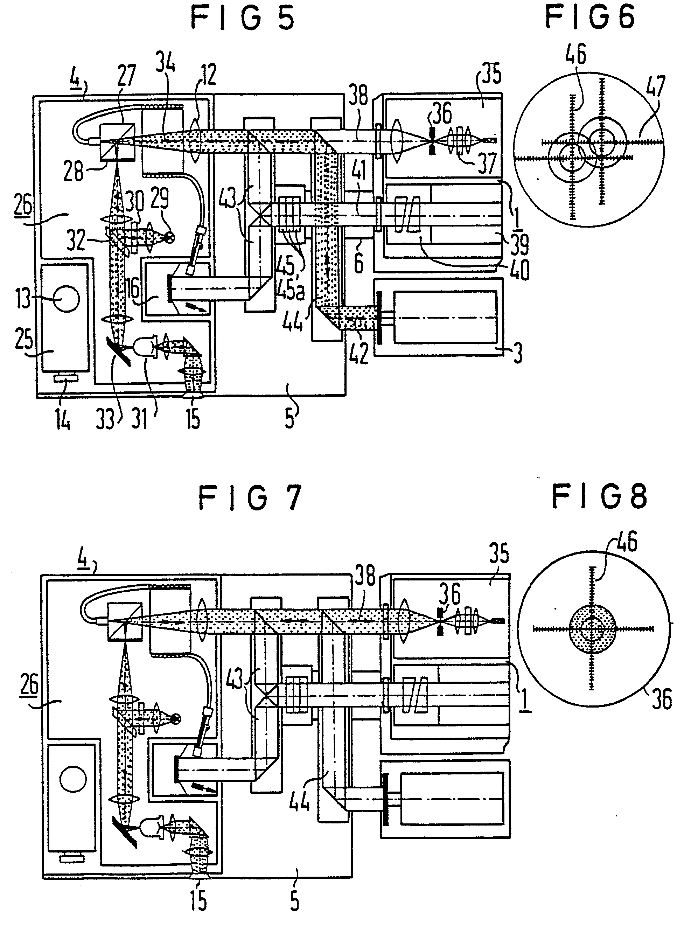

Der nähere Aufbau der erfindungsgemäßen Einrichtung wird nun anhand der Fig. 5 erläutert, in welcher die Justier- und Prüfeinrichtung und ein Laserentfernungsmeßsystem sowie deren Kopplung schematisch dargestellt sind. Das Meßgerät 4 enthält — wie bereits erwähnt — eine Einstelleinrichtung 25 mit zwei Drehknöpfen 13, 14, eine Streueinheit 16 und den Kollimator 26. Dieser ist hier als Infrarot-Kollimator ausgebildet, der auf Wellenlängen von z. B. 1.064 nm und 633 nm korrigiert ist. Der Infrarot-Kollimator 26 besteht hier aus einer Kollimatorlinse 12, einem Strahlenteilerwürfel 27 mit an einer Würfelseite vorgesehener Strichplatte 28, einer Infrarot-Lichtquelle 29 zur Beleuchtung der Strichplatte mit vorgesetztem Filter oder Filtersatz 30 zur schmalbandigen Filterung sowie einem Infrarot-Bildwandler 31 mit dem in der Strahlengang des Bildwandlers eingespiegelten, mit einem Schutzfilter ausgestatteten Okular 15 als Einrichtung zur Beobachtung der beleuchteten Strichplatte 28 des Strahlenteilerwürfels 27. Außerdem sind noch entsprechende Linsensysteme in den Kollimatorstrahlengang eingefügt. Der Strahlengang der Infrarot-Lichtquelle 29 und des Infrarot-Bildwandlers 31 verlaufen parallel zueinander und senkrecht zum Strahlengang des Kollimators, wobei der Strahlengang der Infrarot-Lichtquelle mittels eines Teilerspiegels 32 und der Strahlengang des Infrarot-Bildwandlers mittels eines Spiegels 33 in den Strahlengang des Kollimators eingespiegelt sind. Die Kollimatorachse ist hier mit 34 bezeichnet.

Das Laserentfernungsmeßsystem besteht aus einem dem Kollimatorausgang gegenüberstehenden Empfänger 35 mit Gesichtsfeldblende 36, einer Filteranordnung 37 und entsprechender Empfängeroptik mit Empfängerachse 38 sowie einem Sender 39 mit einer von zwei Keilscheiben gebildeten Ablenkeinheit 40 und entsprechender Senderoptik mit Senderachse 41. Außerdem ist noch die Referenzeinheit 3 mit der Referenzachse 42 in Fig. 5 eingezeichnet, welche hier von der Empfängerachse abliegt und z. B. die Referenzachse eines Visiergerätes darstellt.

Zur optischen Kopplung zwischen dem Meßgerät 4 und dem aus Empfänger 35, Sender 39 sowie der Referenzeinheit 3 bestehenden Laserentfernungsmeßsystem 1 ist der optische Adapter 5 vorgesehen, der hier wie das Meßgerät als selbständige Einheit mit einem eigenen Gehäuse ausgebildet ist. Als wesentliche Elemente weist der optische Adapter zwei bewegbare optische Koppelglieder 43 bzw. 44 unterschiedlicher Länge auf. Diese Koppelglieder besitzen jeweils mindestens zwei parallel zueinander angeordnete Umlenkspiegel und sind hier z. B. als Z-Umlenkspiegel in Form von Parallelepipeden ausgebildet. Derartige Koppelglieder sind vorteilhafterweise in gewissen Grenzen justierunempfindlich. Das kürzere Koppelglied 43 überbrückt den Abstand zwischen der Senderachse 41 und der Kollimatorachse 34, ist vom Kollimatorausgang um die Senderachse 41 vor die dem Kollimatorausgang auf einem Kreisbogen liegende Streueinheit 16 schwenkbar und überbrückt damit auch den Abstand zwischen der Streueinheit und der Senderachse. Das längere Koppelglied 44 überbrückt den Abstand zwischen der Kollimatorachse 34 und der Referenzachse 42 und ist mit seiner Eintrittsöffnung um die Senderachse 41 aus der Kollimator- und der Empfängerachse 34 bzw. 38 herausschwenkbar. Außerdem weist der optische Adapter noch austauschbare Dämpfungsfilter 45 auf, welche im Strahlengang zwischen Sender 39 und Kollimator 26 vorgesehen und hier zwischen den Koppelgliedern 43 und 44, also vor dem kürzeren Koppelglied 43 angeordnet sind. Die Dämpfungsfilter 45 dienen für die später beschriebene Extinktionswertmessung und bestehen in zweckmäßiger Weise aus kalibrierten Farb- und/oder Filtergläsern. Zur Abschwächung des Laserstrahls ist ferner noch mindestens ein zusätzliches, in den strahlengang zwischen Sender 39 und Kollimator 26 ein- und ausschwenkbares Dämpfungsfilter 45a vorgesehen. Schließlich ist der optische Adapter 5 an der dem Lasersender 39 zugewandten Außenseite noch mit dem geschlossenen, den Abstand zwischen dem optischen Adapter und der Senderoptik überbrückenden Schutztubus 6 ausgebildet.

Die Meßvorgänge der erfindungsgemäßen Einrichtung beginnen mit der Grundjustierung des Gerätes, d. h. es muß Parallelität zwischen der Kollimatorachse 34 und der Referenzachse 42 hergestellt werden. Da — wie im Falle der Fig. 5 — Empfängerachse 38 und Referenzachse 42 nicht zusammenfallen, wird mittels des längeren Umlenkspiegels 44 im optischen Adapter 5 der in der Fig. 5 markierte Strahlengang des Infrarot-Kollimators 26 auf die Referenzachse 42 gelenkt. Die optische Achse 34 des Kollimators wird dann mit Hilfe der Einstelleinrichtung 25 genau auf die Referenzachse 42 ausgerichtet, wobei das Strichkreuz 46 (Fig. 6) der Kollimatorstrichplatte 28 mittels Beobachtung im Okular 15 mit einem Strichkreuz 47 einer Strichplatte der Referenzeinheit 3 zur Deckung gebracht wird.

Zur Prüfung und Justierung der optischen Achsen des Laserentfernungsmessers ist das Meßgerät 4 so an das Entfernungsmeßsystem adaptiert, daß der Kollimator 26 genau dem Empfänger 35 gegenübersteht. Zur Prüfung der optischen Achse des Empfängers werden die Umlenkspiegel weggeschwenkt, so daß der optische Strahlengang Empfänger-Kollimator frei ist. Der Kollimator 26 steht nun direkt vor dem Empfänger (Fig. 7). Die Gesichtsfeldblende 36 des Empfängers 35 und damit die Lage der Empfängerachse 38 wird über den Kollimator scharf agbebildet (Fig. 8). Der Durchmesser der Blende 36 ist ein Maß für das Empfängergesichtsfeld. Auf diese Weise kann durch Beobachtung des Bildes der Empfängergesichtsfeldblende im Okular 15 das Empfängersichtsfeld vermessen und die Justierung der Empfängerachse kontrolliert und korrigiert werden.

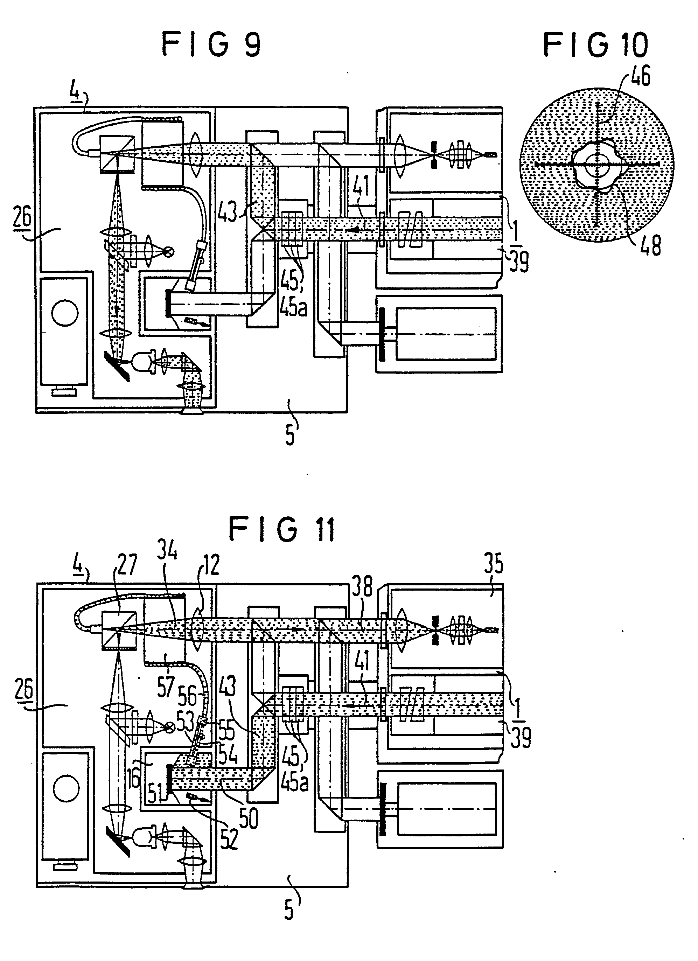

In entsprechender Weise können die Justierung der Senderachse 41, die Sendestrahldivergenz und das Sendefernfeld überprüft werden. Zur Prüfung der optischen Achse 41 des Senders 39 wird der Sendestrahl über den kürzeren Umlenkspiegel 43 und die Dämpfungsfilter 45 in den Kollimator 26 gelenkt (Fig. 9). Das Fernfeld des Laserstrahls wird abgebildet (Fig. 10) und ermöglicht die Messung der optischen Achse des Senders. Der Durchmesser des abgebildeten Laserstrahles, d. h. des Leuchtfleckes 48, ist ein Maß für die Divergenz.

Weitere Meßvorgänge, wie Kontrolle der Ausgangleistung des Lasersenders, Prüfung der Entfernungsmeßgenauigkeit und Messung der Systemempfindlichkeit, können mittels der in einem eigenen, geschlossenen Raum des Meßgerätes 4 vorgesehenen Streueinheit 16 vorgenommen werden (Fig. 11). Hierzu besteht die Streueinheit aus einer das Laserlicht des Sendestrahles diffus streuenden in der Mittelachse 50 der Streueinheit angeordneten Streuscheibe 51 und einem im Streubereich der Streuscheibe vorgesehenen, mit einer Leistungsmeßelektronik in Verbindung stehenden Fotoelement 52, z. B. einem Fotodetektor. Außerdem ist in den Streubereich der Streuscheibe 51 jeweils ein Ende von zwei Lichtwellenleitungen 53 und 54 eingekoppelt, die über einen optischen Koppler 55 auf eine gemeinsame Lichtwellenleitung 56 zusammengefaßt sind. Das andere Ende der gemeinsamen Lichtwellenleitung 56 ist in den Kollimator 26 eingekoppelt, indem es in Richtung der Kollimatorachse 34 an den Strahlenteilerwürfel 27 angekoppelt ist. Die Lichtwellenleitung 56 ist auf eine Spule 57' aufgewickelt, welche im Gehäuse des Meßgerätes vorgesehen und hier konzentrisch zur Kollimatorachse 34 zwischen dem Strahlenteilerwürfel 27 und der Kollimatorlinse 12 angeordnet ist. Die Spule kann aber auch in der Streueinheit selbst untergebracht sein. Die von den beiden Lichtwellenleitungen 53 und 56 gebildete eine Lichtwellenleitung hat eine bestimmte Länge in einem Bereich von z. B. etwa 300-900 m und stellt eine optische Verzögerungsleitung dar. Die von den beiden Lichtwellenleitungen 54 und 56 gebildete andere Lichtwellenleitung hat eine zur ersten Lichtwellenleitung unterschiedliche Länge, indem die Lichtwellenleitung 54 länger ist als die Lichtwellenleitung 53 und eine zusätzliche optische Verzögerungsleitung als Nebenstrecke bildet, die eine bestimmte Länge hat, derart, daß durch die zusätzliche Nebenstrecke eine einer bestimmten Meßstrecke entsprechende Differenzlänge entsteht.

Als optische Koppler bei der Zusammenfassung mehrerer Lichtwellenleitungenauf eine gemeinsame Lichtwellenleitung kann in vorteilhafter Weise ein optischer Koppler verwendet werden, wie er beispielsweise in der Zeitschrift « Siemens Components » 18 (1980), Heft 3, S. 144-150 oder in den « Siemens Forschungs- und Entwicklungsberichten » Bd. 8 (1979), Nr. 3, S. 130-135 angegeben ist.

Zur Leistungskontrolle wird nun der Strahl des Lasersenders 39 über den nun vor die Streueinheit 16 geschwenkten kürzeren Umlenkspiegel 43 in die Streueinheit gelenkt. Ein Teil des an der Streuscheibe 51 diffus gestreuten Laserlichts gelangt auf das Fotoelement 52. Der Fotostrom wird in der Leitungsmeßelektronik ausgewertet und auf dem Anzeige- und Bedienfeld 19 (Fig. 4) digital angezeigt.

Zur Prüfung der Entfernungsmeßgenauigkeit wird ein Teil des an der Streuscheibe 51 diffus gestreuten Lichtes in beide Lichtwellenleitungen 53 und 54 eingekoppelt, am Ende der gemeinsamen Lichtwellenleitung 56 in den Kollimator 26 eingespeist und gerichtet in den Empfänger 35 gestrahlt. Die durch die Längen der Lichtwellenleitungen bedingten Laufzeiten werden vom Laserentfernungsmesser als Entfernungsmeßwerte ausgewertet und können auf der ersten Entfernungsmeßwertanzeige 20 (Fig. 4) des Bedien- und Anzeigefeldes 19 abgelesen werden. Zur Kontrolle der Tiefenauflösung wird ein Teil des Lichtes über die von den beiden Lichtwellenleitungen 54, 56 gebildete, gegenüber der ersten Lichtwellenleitung längere Lichtwellenleitung, also über die Nebenstrecke, geschickt. Der zugehörige Entfernungsmeßwert kann auf der zweiten Entfernungsmeßwertanzeige 21 abgelesen werden.

Sie Systemempfindlichkeit schließlich wird über den sogenannten Extinktionswert ermittelt. Dazu wird der Laserstrahl ebenfalls auf die Streuscheibe 51 gerichtet. Ein Teil des Streulichtes wird über die Lichtwellenleitungen 53, 54 und 56 in den Kollimator 26 eingekoppelt und gerichtet in den Laserempfänger 35 gestrahlt. Zur Ermittlung des Extinktionswertes wird der auf die Streuscheibe 51 gerichtete Laserstrahl mit den kalibrierten Dämpfungsfiltern 45 so lange gedämpft, bis nur noch ca. 50 % der möglichen Entfernungsmeßwerte eines der beiden Entfernungsmeßwerte angezeigt werden. Die Häufigkeit der möglichen Entfernungsmeßwerte wird aus jeweils 100 Messungen ermittelt und digital angezeigt. Die Dämpfungswerte der Dämpfungsfilter ergeben zusammen mit der Eigendämpfung des Meßgerätes ein Maß die Systemempfindlichkeit.

## Patentansprüche

1. Justier- und Prüfeinrichtung für ein einen Sender (39) und einen Empfänger (35) enthaltendes Laserentfernungsmeßsystem (1) zur insbesondere parallelen Ausrichtung der optischen Achsen (41 bzw. 38) von Sender (39) und Empfänger (35) zueinander und zu einer optischen Referenzachse (42), mit einem Kollimator (26), der eine optische Kollimatorachse (34) aufweist und aus einer Kollimatorlinse (12), einem Strahlenteilerwürfel (27) mit Strichplatte (28), einer Lichtquelle (29) zur Beleuchtung der Strichplatte (28) und einer Einrichtung (15) zur Beobachtung der beleuchteten Strichplatte (28) besteht und mit einem optischen Adapter (5), der die optische Achse (41) des Senders (39) und die optische Referenzachse (42) auf die optische Kollimatorachse (34) lenkt, dadurch gekennzeichnet, daß der Kollimator (26) in einem als selbständige Einheit mit einem eigenen Gehäuse ausgebildeten Meßgerät (4) angeordnet und die optische Kollimatorachse (34) mittels einer in dem Meßgerät (4) vorgesehenen Einstelleinrichtung (25) auf die optische Referenzachse (42) ausrichtbar ist, daß der optische Adapter (5) ein optisches Parallelepiped (43, 44) enthält, und daß zur mechanischen Kopplung des Meßgerätes (4) an das Laserentfernungsmeßsystem (1) ein das Meßgerät (4) tragender mechanischer Adapter (7) vorgesehen ist, der an dem Laserentfernungsmeßsystem (1) oder einer Tragekonstruktion (2) für das Laserentfernungsmeßsystem (1) befestigbar ist.

2. Einrichtung nach Anspruch 1, dadurch gekennzeichnet, daß der optische Adapter (5) als selbständige Einheit mit einem eigenen gehäuse ausgebildet ist.

3. Einrichtung nach Anspruch 1 oder 2, dadurch gekennzeichnet, daß der Kollimator (26) als Infrarot-Kollimator mit einer Infrarot-Lichtquelle (29), einem im Strahlengang der Infrarot-Lichtquelle angeordneten Filter (30), einem Infrarot-Bildwandler (31) und einem in den Strahlengang des Infrarot-Bildwandlers eingespiegelten Okular (15) als Beobachtungseinrichtung ausgebildet ist.

4. Einrichtung nach Anspruch 3, dadurch gekennzeichnet, daß der Strahlengang der Infrarot-Lichtquelle (29) und des Infrarot-Bildwandlers (31) parallel zueinander und senkrecht zum Strahlengang des Kollimators (26) gerichtet und mittels eines Teilerspiegels (32) bzw. eines Spiegels (33) in den Strahlengang des Kollimators eingespiegelt sind.

5. Einrichtung nach Anspruch 1 oder 2, dadurch gekennzeichnet, daß der Kollimator als Infrarot-Kollimator mit einer in den Kollimatorstrahlengang mittels eines Teilerspiegels eingespiegelten Infrarot-Lichtquelle, einem im Strahlengang der Infrarot-Lichtquelle angeordneten Filter und einer Fernsehkamera mit abgesetztem Monitor als Beobachtungseinrichtung ausgebildet ist.

6. Einrichtung nach einem der Ansprüche 1 bis 5, dadurch gekennzeichnet, daß der Kollimator (26) auf einer in x- und y-Richtung eines Koordinatensystems mittels der Einstelleinrichtung (25) bewegbaren Trageinrichtung angeordnet ist.

7. Einrichtung nach einem der Ansprüche 1 bis 6, dadurch gekennzeichnet, daß die Einstelleinrichtung (25) aus einem mittels zweier Drehknöpfe (13, 14) betätigbaren Einstellgetriebe besteht.

8. Einrichtung nach einem der vorhergehenden Ansprüche, dadurch gekennzeichnet, daß der mechanische Adapter (7) aus mindestens zwei quer zueinander angeordneten Tragplatten (8, 9a, 9b) besteht, von denen die eine Tragplatte (8) zur schraubbaren Befestigung des Meßgerätes (4) und die zur ersten Tragplatte (8) quer angeordneten Tragplatten (9a, 9b) zur Befestigung des mechanischen Adapters (7) am Laserentfernungsmeßsystem (1) oder dessen Tragekonstruktion (2) dienen.

9. Einrichtung nach einem der vorhergehenden Ansprüche, dadurch gekennzeichnet, daß der optische Adapter (5) mit dem Meßgerät (4) mechanisch koppelbar ist.

10. Einrichtung nach Anspruch 9, dadurch gekennzeichnet, daß das Meßgerät (4) und der optische Adapter (5) zur Ankopplung des optischen Adapters an den einander zugekehrten Seiten Schwalbenschwanzführungen (17) und eine Schraubklemmung (18) aufweisen.

11. Einrichtung nach einem der vorhergehenden Ansprüche, dadurch gekennzeichnet, daß das Meßgerät (4) derart mit dem Laserentfernungsmeßsystem (1) koppelbar ist, daß der Kollimatorausgang dem Empfänger (35) gegenübersteht.

12. Einrichtung nach einem der vorhergehenden Ansprüche, dadurch gekennzeichnet, daß im Strahlengang zwischen Sender (39) und Kollimator (26) Dämpfungsfilter (45) angeordnet sind.

13. Einrichtung nach Anspruch 12, dadurch gekennzeichnet, daß die Dämpfungsfilter (45) im optischen Adapter (5) vorgesehen sind.

14. Einrichtung nach Anspruch 13, dadurch gekennzeichnet, daß der optische Adapter (5) zwei jeweils aus einem Parallelepiped bestehende optische Koppelglieder (43, 44) enthält, von denen das eine (43) den Abstand Kollimatorachse (34) — Senderachse (41) überbrückt und das andere (44) den Abstand Kollimatorachse (34) — optische Referenzachse (42) überbrückt.

15. Einrichtung nach Anspruch 14, dadurch gekennzeichnet, daß die Dämpfungsfilter (45) im Strahlengang des Sendestrahles vor dem den Abstand Kollimatorachse (34) — Senderachse (41) überbrückenden optischen Koppelglied (43) angeordnet sind.

16. Einrichtung nach einem der Ansprüche 12 bis 15, dadurch gekennzeichnet, daß die Dämpfungsfilter (45) austauschbar sind.

17. Einrichtung nach einem der Ansprüche 12 bis 16, dadurch gekennzeichnet, daß zur Abschwächung eines Laserstrahles ein zusätzliches, in den Strahlengang zwischen Sender (39) und Kollimator (26) ein- und ausschwenkbares Dämpfungsfilter (45a) vorgesehen ist.

18. Einrichtung nach einem der Ansprüche 12 bis 17, dadurch gekennzeichnet, daß die Dämpfungsfilter (45, 45a) aus kalibrierten Farb- und/oder Filtergläsern bestehen.

19. Einrichtung nach einem der vorhergehenden Ansprüche, dadurch gekennzeichnet, daß der optische Adapter (5) an der dem Sender (39) zugewandten Außenseite mit einem geschlossenen, den Abstand zwischen dem optischen Adapter und der Senderoptik überbrückenden Schutztubus (6) ausgebildet ist.

20. Einrichtung nach einem der vorhergehenden Ansprüche, dadurch gekennzeichnet, daß in einem eigenen, geschlossenen Raum des Meßgerätes (4) eine Streueinheit (16) mit einer das Licht des Sendestrahles diffus streuenden Streuscheibe (51) vorgesehen ist, und daß im Streubereich der Streuscheibe (51) ein mit einer Leistungsmeßelektronik in Verbindung stehendes Fotoelement (52) angeordnet ist.

21. Einrichtung nach Anspruch 20, dadurch gekennzeichnet, daß das Fotoelement (52) durch einen Fotodetektor ersetzt ist.

22. Einrichtung nach Anspruch 20 oder 21, dadurch gekennzeichnet, daß in den Streubereich der Streuscheibe (51) ein Ende mindestens einer Lichtwellenleitung (53) bestimmter Länge und das andere Ende der Lichtwellenleitung in den Kollimator (26) eingekoppelt ist.

23. Einrichtung nach Anspruch 22, dadurch gekennzeichnet, daß das in den Kollimator (26) eingekoppelte Ende der Lichtwellenleitung (56) in Richtung der Kollimatorachse (34) an den Strahlenteilerwürfel (27) angekoppelt ist.

24. Einrichtung nach Anspruch 22 oder 23, dadurch gekennzeichnet, daß die Lichtwellenleitung (56) auf einer Spule (57) aufgewickelt ist.

25. Einrichtung nach Anspruch 24, dadurch gekennzeichnet, daß die Spule (57) im Gehäuse des Meßgerätes (4) angeordnet ist.

26. Einrichtung nach einem der Ansprüche 22 bis 25, dadurch gekennzeichnet, daß die Lichtwellenleitung (53, 54, 56) eine Länge von etwa 300 bis 900 m aufweist.

27. Einrichtung nach einem der Ansprüche 22 bis 26, dadurch gekennzeichnet, daß bei mehreren Lichtwellenleitungen (53, 54) diese unterschiedliche Längen aufweisen.

28. Einrichtung nach Anspruch 27, dadurch gekennzeichnet, daß die Lichtwellenleitungen (53, 54) über einen optischen Koppler (55) auf eine gemeinsame Lichtwellenleitung (56) zusammengefaßt sind.

29. Einrichtung nach Anspruch 28, dadurch gekennzeichnet, daß bei zwei Lichtwellenleitungen (53, 54) die zusätzliche Lichtwellenleitung (54) eine derartige Länge aufweist, daß durch die zusätzliche Lichtwellenleitung (54) eine einer bestimmten Meßstrecke entsprechenden Differenzlänge entsteht.

30. Einrichtung nach einem der Ansprüche 20 bis 29, dadurch gekennzeichnet, daß ein den Abstand Kollimatorachse (34) — Senderachse (41) überbrückendes optisches Koppelglied (43) des optischen Adapters (5) auch den Abstand Streueinheit (16) — Senderachse (41) überbrückt und vor die Streueinheit (16) schwenkbar ist, und daß der Kollimatorausgang und die Streueinheit auf einem Kreisbogen liegen angeordnet sind.

31. Einrichtung nach einem der vorhergehenden Ansprüche, dadurch gekennzeichnet, daß ein optisches Koppelglied oder optische Koppelglieder (43, 44) des optischen Adapters (5) um die Senderachse (41) schwenkbar ist oder sind.

32. Einrichtung nach einem der vorhergehenden Ansprüche, dadurch gekennzeichnet, daß das Meßgerät (4) mit mindestens einer Entfernungsmeßwertanzeige (20, 21) versehen ist.

33. Einrichtung nach einem der vorhergehenden Ansprüche, dadurch gekennzeichnet, daß alle Bedien- und Anzeigeelemente des Meßgerätes (4) auf einem als selbständige Einheit abnehmbar auf dem Meßgerät befestigten Bedien- und Anzeigefeld (19) zusammengefaßt sind.

34. Einrichtung nach einem der vorhergehenden Ansprüche, dadurch gekennzeichnet, daß das Meßgerät (4) mit einer Sicherheitseinrichtung ausgebildet ist und die Meßvorgänge nur bei geschlossenem Sicherheitskreis der Sicherheitseinrichtung durchführbar sind.

35. Einrichtung nach einem der vorhergehenden Ansprüche, dadurch gekennzeichnet, daß die Beobachtungseinrichtung mit mindestens einem Schutzfilter gegen die Laserstrahlung versehen ist.

## Claims

1. A device for adjusting and testing a laser range measuring system (1) which contains a transmitter (39) and a receiver (35), in particular for alignment of the optical axes (41 and 38) of transmitter (39) and receiver (35) to be parallel relative to one another and to an optical reference axis (42), comprising a collimator (26) having an optical collimator axis (34), formed by a collimator lens (12), a beam-splitting cube (27) with a reticule (28), a light source (29) which illuminates the reticule (28), and an observation device (15) for the illuminated reticule (28), with an optical adaptor (5) which directs the optical axis (41) of the transmitter (39) and the optical reference axis (42) towards the optical collimator axis (34), characterised in that the collimator (26) is arranged in a measuring device (4) as an independent unit with its own housing, and that the optical collimator axis (34) can be aligned to the optical reference axis (42) by means of an adjusting device (25) contained in the measuring device (4), that the optical adaptor (5) contains an optical parallelepiped (43, 44), and that a mechanical adaptor (7) is provided for the mechanical coupling of the measuring device (4) to the laser range measuring system (1) which bears the measuring device (4) and can be attached to the laser range measuring system (1) or to a carrier construction (2) for the laser range measuring system (1).

2. A device as claimed in Claim 1, characterised in that the optical adaptor (5) is an independent unit with its own housing.

3. A device as claimed in Claim 1 or Claim 2, characterised in that the collimator (26) consists of an infra-red collimator comprising an infra-red light source (29), a filter (30) in the beam path of the infra-red light source, an infra-red image converter (31), and an observation device eyepiece (15) in the beam path of the infra-red image converter.

4. A device as claimed in Claim 3, characterised in that the beam path of the infra-red light source (29) and of the infra-red image converter (31) extend parallel to one another and at right angles to the beam path of the collimator (26), and are deflected into the beam path of the collimator by means of a beam-splitter (32) and a reflector (33).

5. A device as claimed in Claim 1 or Claim 2, characterised in that the collimator is an infra-red collimator comprising an infra-red light source deflected into the collimator beam path by a beam-splitter, a filter being arranged in the beam path of the infra-red light source, and a television camera with a remote monitor serving as an observation device.

6. A device as claimed in one of Claims 1 to 5, characterised in that the collimator (26) is arranged on a carrier device which can be moved in the x and y directions of a coordinate system by means of the adjusting device (25).

7. A device as claimed in one of Claims 1 to 6, characterised in that the adjusting device (25) consists of an adjusting gear actuated by two rotating knobs (13, 14).

8. A device as claimed in one of the preceding Claims, characterised in that the mechanical adaptor (7) consists of at least to carrier plates (8, 9a, 9b) arranged mutually transversely, of which the first carrier plate (8) provides a screw fixing of the measuring device (4), whilst the carrier plates (9a, 9b), arranged mutually transversely relative to the first carrier plate (8) serve to secure the mechanical adaptor (7) to the laser range measuring system (1) or to its carrier construction (2).

9. A device as claimed in one of the preceding Claims, characterised in that the optical adaptor (5) is mechanically-coupled to the measuring device (4).

10. A device as claimed in Claim 9, characterised in that the measuring device (4) and the optical adaptor (5) are provided with dovetail guides (7) for the coupling of the optical adaptor, and have a screw terminal (18) on their confronting sides.

11. A device as claimed in one of the preceding Claims, characterised in that the measuring device (4) can be coupled to the laser range measuring system (1) such that the collimator output is located opposite the receiver (35).

12. A device as claimed in one of the preceding Claims, characterised in that attenuating filters (45) are arranged in the beam path between the transmitter (39) and the collimator (26).

13. A device as claimed in Claim 12, characterised in that the attenuating filters (45) are arranged in the optical adaptor (5).

14. A device as claimed in Claim 13, characterised in that the optical adaptor (5) contains two parallelepiped optical coupling elements (43, 44), of which the first (43) bridges the gap between the collimator axis (34) and the transmitter axis (41), and the other (44) bridges the gap between the collimator axis (34) and the optical reference axis (42).

15. A device as claimed in Claim 14, characterised in that the attenuating filters (45) are arranged in the beam path of the transmitted beam preceding that optical coupling element (43) which bridges the gap between the collimator axis (34) and the transmitter axis (41).

16. A device as claimed in one of Claims 12 to 15, characterised in that the attenuating filters (45) are exchangeable.

17. A device as claimed in one of Claims 12 to 16, characterised in that for the attenuation of a laser beam, an additional attenuating filter (45a) is provided to be pivotted into and out of the beam path between the transmitter (39) and the collimator (26).

18. A device as claimed in one of Claims 12 to 17, characterised in that the attenuating filters (45, 45a) consist of calibrated coloured and/or filter glass.

19. A device as claimed in one of the preceding Claims, characterised in that the optical adaptor (5) is provided on its exterior with a closed protective tube (6) facing towards the transmitter (39) which bridges the gap between the optical adaptor and the transmitter optics.

20. A device as claimed in one of the preceding Claims, characterised in that a separate, closed chamber of the measuring device (4) contains a diffusing unit (16) including a scattering disc (51) which diffuses the transmitted light beam, and that the diffusion range of the scattering disc (51) contains a photo-element (52) which is connected to a power measurement electronic unit.

21. A device as claimed in Claim 20, characterised in that the photo-element (52) is replaced by a photo-detector.

22. A device as claimed in Claim 20 or 21, characterised in that one end of at least one light waveguide (53) of a specified length is input-coupled into the diffusion range of the scattering disc (51), and the other end of the light waveguide is input-coupled into the collimator (26).

23. A device as claimed in Claim 22, characterised in that the end of that light waveguide (56) input-coupled into the collimator (26) is coupled to the beam-splitting cube (27) in the direction of the collimator axis (34).

24. A device as claimed in Claim 22 or 23, characterised in that the light waveguide (56) is wound in a coil (57).

25. A device as claimed in Claim 24, characterised in that the coil (57) is arranged in the housing of the measuring device (4).

26. A device as claimed in one of Claims 22 to 25, characterised in that the light waveguide (53, 54, 56) has a length of approximately 300 to 900 m.

27. A device as claimed in one of Claims 22 to 26, characterised in that a plurality of light waveguides (53, 54) are provided, which differ in length.

28. A device as claimed in Claim 27, characterised in that the light waveguides (53, 54) are combined via an optical coupler (55) to form a common light waveguide (56).

29. A device as claimed in Claim 28, characterised in that with two light waveguides (53, 54) provided, the length of the additional light waveguide (54) is such that the additional light waveguide (54) results in a length difference corresponding to a specific measurement range.

30. A device as claimed in one of Claims 20 to 29, characterised in that an optical coupling element (43) of the optical adaptor (5), which coupling element bridges the gap between the collimator axis (34) and the transmitter axis (41), also bridges the gap between the diffusing unit (16) and the transmitter axis (41), can be pivotted in front of the diffusing unit (16), and that the collimator output and the diffusing unit are arranged on a circular arc.

31. A device as claimed in one of the preceding Claims, characterised in that an optical coupling element or optical coupling elements (43, 44) of the optical adaptor (5) can pivot about the transmitter axis (41).

32. A device as claimed in one of the preceding Claims, characterised in that the measuring device (4) is provided with at least one range measured value display (20, 21).

33. A device as claimed in one of the preceding Claims, characterised in that all the control and display elements of the measuring device (4) are combined on a control and display panel (19) detachably secured to the measuring device as an independent unit.

34. A device as claimed in one of the preceding Claims, characterised in that the measuring device (4) is provided with a security device such that measurement procedures can be carried out only when the security circuit of the security device is closed.

35. A device as claimed in one of the preceding Claims, characterised in that the observation device is provided with at least one protective filter providing protection from the laser radiation.

**Revendications**

1. Dispositif d'ajustement et de contrôle d'un télémètre laser (1) contenant un émetteur (39) et un récepteur (35), pour l'alignement notamment en parallèle des axes optiques (41 et 38) de l'émetteur (39) et du récepteur (35) l'un par rapport à l'autre et par rapport à un axe optique de référence (42), un collimateur (26), qui possède un axe optique (34) et est constitué par une lentille de collimation (12), un prisme diviseur de rayonnement (27) comportant un réticule (28), une source de lumière (29) servant à éclairer le réticule (28) et un dispositif (15) pour observer le réticule (28) éclairé et un adaptateur optique (5), qui dirige l'axe optique (41) de l'émetteur (39) et l'axe optique de référence (42) vers l'axe optique (34) du collimateur, caractérisé par le fait que le collimateur (26) est disposé dans un appareil de mesure (4) réalisé sous la forme d'une unité indépendante comportant un boîtier propre, que l'axe optique (34) du collimateur peut être aligné sur l'axe optique de référence (42) au moyen d'un dispositif de réglage (25) prévu dans l'appareil de mesure (4), que l'adaptateur optique (5) contient un parallélépipède optique (43, 44), et que pour le couplage mécanique de l'appareil de mesure (4) au télémètre laser (1), il est prévu un adaptateur mécanique (7) portant l'appareil de mesure (4) et qui peut être fixé au télémètre laser (1) ou à une structure (2) de support du télémètre laser (1).

2. Dispositif suivant la revendication 1, caractérisé par le fait que l'adaptateur optique (5) est réalisé sous la forme d'une unité indépendante comportant un boîtier séparé.

3. Dispositif suivant la revendication 1 ou 2, caractérisé par le fait que le collimateur (26) est réalisé sous la forme d'un collimateur à infrarouge comportant une source de rayonnement infrarouge (29), un filtre (3) disposé sur le trajet du rayonnement de la source de rayonnement infrarouge, un convertisseur d'images infrarouges (31) et un occulaire (15) inséré par réflexion dans le trajet du rayonnement du convertisseur d'images infrarouges, en tant que dispositif d'observation.

4. Dispositif suivant la revendication 3, caractérisé par le fait que le trajet du rayonnement de la source de rayonnement infrarouge (29) et celui du convertisseur d'images infrarouges (31) sont parallèles entre eux et perpendiculaires au trajet du rayonnement du collimateur (26) et sont insérés au moyen d'un miroir diviseur (32) ou d'un miroir (33), dans le trajet de rayonnement du collimateur.

5. Dispositif suivant la revendication 1 ou 2, caractérisé par le fait que le collimateur est réalisé sous la forme d'un collimateur infrarouge comportant une source de rayonnement infrarouge insérée au moyen d'un miroir diviseur dans le trajet de rayonnement du collimateur, un filtre disposé dans le trajet de rayonnement de la source de rayonnement infrarouge, et une caméra de télévision comportant un moniteur situé à distance, en tant que dispositif d'observation.

6. Dispositif suivant l'une des revendications 1 à 5, caractérisé par le fait que le collimateur (26) est disposé sur un dispositif de support déplaçable suivant la direction x et la direction y d'un système de coordonnées, à l'aide d'un dispositif de réglage (25).

7. Dispositif suivant l'une des revendications 1 à 6, caractérisé par le fait que le dispositif de réglage (25) est constitué par un mécanisme de réglage pouvant être actionné au moyen de deux boutons rotatifs (13, 14).

8. Dispositif suivant l'une des revendications précédentes, caractérisé par le fait que l'adaptateur mécanique (7) est constitué par au moins deux plaques de support (8, 9a, 9b) disposées transversalement l'une par rapport à l'autre et, parmi lesquelles la première plaque de support (8) est utilisée pour réaliser la fixation par vissage de l'appareil de mesure (4) et les plaques de support (9a, 9b), disposées transversalement par rapport à la première plaque de support (8), sont utilisées pour la fixation de l'adaptateur mécanique (7) sur le télémètre laser (1) ou sur sa structure de support (2).

9. Dispositif suivant l'une des revendications précédentes, caractérisé par le fait que l'adaptateur optique (5) peut être accouplé mécaniquement à l'appareil de mesure (4).

10. Dispositif suivant la revendication 9, caractérisé par le fait que l'appareil de mesure (4) et l'adaptateur optique (5) comportent, sur leurs faces tournées l'une vers l'autre, des guides en queue d'aronde (17) et un dispositif de serrage à vis (18) pour réaliser l'accouplement et l'adaptation optique.

11. Dispositif suivant l'une des revendications précédentes, caractérisé par le fait que l'appareil de mesure (4) peut être couplé au télémètre laser (1) de manière que la sortie du collimateur soit en vis-à-vis du récepteur (35).

12. Dispositif suivant l'une des revendications précédentes, caractérisé par le fait qu'un filtre d'atténuation (45) est disposé sur le trajet du rayonnement entre l'émetteur (39) et le collimateur (26).

13. Dispositif suivant la revendication 12, caractérisé par le fait que des filtres d'atténuation (45) sont prévus dans l'adaptateur optique (5).

14. Dispositif suivant la revendication 13, caractérisé par le fait que l'adaptateur optique (5) contient deux organes optiques de couplage (43, 44), constitués chacun par un parallélépipède, et dont l'un (43) s'étend sur la distance entre l'axe (34) du collimateur et l'axe (41) de l'émetteur et dont l'autre (44) s'étend sur la distance entre l'axe (34) du collimateur et l'axe optique de référence (42).

15. Dispositif suivant la revendication 14, caractérisé par le fait que les filtres d'atténuation (45) sont disposés sur le trajet de rayonnement du faisceau d'émission en avant de l'organe optique de couplage (43) s'étendant sur la distance entre l'axe (34) du collimateur et l'axe (41) de l'émetteur.

16. Dispositif suivant l'une des revendications 12 à 15, caractérisé par le fait que les filtres d'atténuation (45) sont remplaçables.

17. Dispositif suivant l'une des revendications 12 à 16, caractérisé par le fait que pour réaliser l'affaiblissement d'un faisceau laser, il est prévu un filtre d'atténuation supplémentaire (45a) pouvant être introduit et ressorti par basculement dans et hors du trajet de rayonnement entre l'émetteur (39) et le collimateur (26).

18. Dispositif suivant l'une des revendications 12 à 17, caractérisé par le fait que les filtres d'atténuation (45, 45a) sont constitués par des verres colorés et/ou des verres filtrants calibrés.

19. Dispositif suivant l'une des revendications précédentes, caractérisé par le fait que l'adaptateur optique (5) comporte, sur sa face extérieure tournée vers l'émetteur (39), un tube de protection (6) s'étendant sur la distance entre l'adaptateur optique et le système optique de l'émetteur.

20. Dispositif suivant l'une des revendications précédentes, caractérisé par le fait qu'une unité de diffusion (16) comportant un disque diffusant (51) qui réalise une dispersion diffuse de la lumière du faisceau d'émission est prévue dans un espace séparé et fermé de l'appareil de mesure (4), et qu'une cellule photovoltaïque (52) reliée à un système électronique de mesure de puissance est disposée dans la zone de diffusion du disque diffusant (50).

21. Dispositif suivant la revendication 20, caractérisé par le fait que la cellule photovoltaïque (52) est remplacée par un photodétecteur.

22. Dispositif suivant la revendication 20 ou 21 caractérisé par le fait qu'une extrémité d'au moins un guide d'ondes optiques (53) de longueur déterminée est couplée dans la zone de diffusion du disque diffusant (51) et que l'autre extrémité du guide d'ondes optiques est couplée dans le collimateur (26).

23. Dispositif suivant la revendication 22, caractérisé par le fait que l'extrémité, couplée dans le collimateur (26), du guide d'ondes optiques (56) est couplée au prisme diviseur de faisceau (27), dans la direction de l'axe (34) du collimateur.

24. Dispositif suivant la revendication 22 ou 23, caractérisé par le fait que le guide d'ondes optiques (56) est enroulé sur un mandrin (57).

25. Dispositif suivant la revendication 24, caractérisé par le fait que le mandrin (57) est disposé dans le boîtier de l'appareil de mesure (4).

26. Dispositif suivant l'une des revendications 22 à 25, caractérisé par le fait que le guide d'ondes optiques (53, 54, 56) possède une longueur d'environ 300 à 900 m.

27. Dispositif suivant l'une des revendications 22 à 26, caractérisé par le fait que dans le cas de plusieurs guides d'ondes optiques (53, 54), ces derniers possèdent des longueurs différentes.

28. Dispositif suivant la revendication 27, caractérisé par le fait que les guides d'ondes optiques (53, 54) sont réunis par l'intermédiaire d'un coupleur optique (55) de manière à former un guide d'ondes optiques commun (56).

29. Dispositif suivant la revendication 28, caractérisé par le fait que dans le cas de deux guides d'ondes optiques (53, 54), le guide d'ondes optiques supplémentaire (54) possède une longueur telle que l'on obtient, sous l'effet de la présence du guide d'ondes optiques supplémentaires (54), une longueur différentielle correspondant à une section de mesure déterminée.

30. Dispositif suivant l'une des revendications 20 à 29, caractérisé par le fait qu'un organe optique de couplage (43), qui s'étend sur la distance entre l'axe (34) du collimateur et l'axe (41) de l'émetteur, de l'adaptateur optique (5) s'étend également sur la distance entre l'unité de diffusion (16) et l'axe (41) de l'émetteur et peut être basculé en avant de l'unité de diffusion (16), et que la sortie du collimateur et l'unité de diffusion sont disposées sur un arc de cercle.

31. Dispositif suivant l'une des revendications précédentes, caractérisé par le fait qu'un ou des organes optiques de couplage (43, 44) de l'adaptateur optique (5) peuvent pivoter autour de l'axe (41) de l'émetteur.

32. Dispositif suivant l'une des revendications précédentes, caractérisé par le fait que l'appareil de mesure (4) comporte au moins un dispositif (20, 21) d'affichage de la valeur de mesure de distance.

33. Dispositif suivant l'une des revendications précédentes, caractérisé par le fait que tous les organes de commande et d'affichage de l'appareil de mesure (4) sont réunis sur un panneau de commande et d'affichage (19) fixé de façon amovible sur l'appareil de mesure, sous la forme d'une unité indépendante.

34. Dispositif suivant l'une des revendications précédentes, caractérisé par le fait que l'appareil de mesure (4) est équipé d'un dispositif de sûreté et que les opérations de mesure ne peuvent être exécutées que lorsque le circuit de sécurité du dispositif de sûreté est fermé.

35. Dispositif suivant l'une des revendications précédentes, caractérisé par le fait que le dispositif d'observation comporte au moins un filtre de protection vis-à-vis du rayonnement laser.

12.

FIG 1

# FIG 2

15 16 4

22 22

12

7

# FIG 3

13 19 15 17

25

18

14

22 22 4

7

# FIG 4

22

17

19 4

22

20 21

17

13 18

15

22

0 048 015

# FIG 5

# FIG 6

# FIG 7

# FIG 8

FIG 9

FIG 10

FIG 11